# EUROPEAN PATENT SPECIFICATION

(11) **EP 0 476 262 B1**
(45) Date of publication and mention of the grant of the patent: **18.06.1997**
(21) Application number: 91112135.8
(22) Date of filing: 19.07.1991
(51) Int. Cl.: G06F 11/00

(54) **Error handling in a VLSI central processor unit employing a pipelined address and execution module**
Fehlerbehandlung in einer zentralen Verarbeitungseinheit aus VLSI, die ein Adress- und Ausführungspipelinemodul verwendet
Traitement d'erreur dans une unité de traitement centrale en VLSI utilisant un module d'exécution et d'adressage en pipeline

(30) Priority: 18.09.1990 US 584229
(43) Date of publication of application: 25.03.1992
(73) Proprietor: Bull HN Information Systems Inc., Billerica, MA 01821-4186 (US)
(72) Inventor: Eckard, Clinton B., Glendate, Arizona 85310 (US); Rabins, Leonard, Scottsdale, Arizona 85251 (US); Lange, Ronald E., Glendale, Arizona 85308 (US)
(74) Representative: Altenburg, Udo, Dipl.-Phys.

(56) References cited:
- US-A- 4 875 160
- US-A- 4 920 477

## Description

### Field of the Invention

This invention relates to information processing systems and, more particularly, to error handling facility in a Very Large Scale Integrated (VLSI) circuit Central Processing Unit (CPU) employing a pipelined address and execution module.

### Background of the Invention

An error handling facility in a CPU employing a pipelined address and execution module, described in the US Patent No. 4,920,477, deals with virtual address table look-aside buffer miss recovery wherein, after a memory access error condition has been detected, the instruction causing the error condition , and those instructions entering the memory pipeline after the instruction causing the error condition, are replayed. First-in/first-out buffers are used for storing the virtual address and instruction status data relating to each memory access instruction. That stored data is then retrieved after an error condition is detected so that the instruction sequence, beginning at the data miss, can be replayed.

The US Patent No. 4,875,160 describes a method for implementing synchronous exception recovery in a pipelined CPU. During the performance of instruction sequences faults may occur which may force the CPU to change the flow of program execution. If the pipelined CPU detects and responds to exceptional conditions such as faults synchronously, at the same time relative to the exception, the pipeline can be halted before any inaccurate instruction results are written. If the writing of results by the exception handling means is prohibited, normal pipeline operation can be resumed as soon as the said means has fixed the faulting conditions, again starting with the re-execution of the faulting instruction.

In the design of a mainframe CPU employing VLSI technology, it is desirable to limit the number of different types of VLSI chips employed in order to contain the design task within manageable bounds. However, it is also highly desirable to provide powerful and reliable error detection and handling features, and this requirement has mandated the provision of various circuits, firmware and software to sense and resolve the diverse types of errors which may occur in operation.

One VLSI chip or logic group in a CPU according to the present invention is an address and execution (AX) unit, a microprocessing engine which performs all address preparation and executes all instructions except decimal arithmetic, binary floating point and multiply/divide instructions. Such AX units are typically "pipelined" such that the various stages involved in fetching, analyzing, preparing and executing several instructions are all in process simultaneously. If all or most CPU errors from the various VLSI units, including the AX unit, are reported to a central error handling facility immediately upon occurrence for the institution of a partial or complete CPU "freeze", it is possible that instructions executing correctly in the pipeline will be aborted because of an AX error detected in the processing of an instruction in an earlier pipeline stage. As a result, performance will be adversely affected, particularly if a restart is undertaken since the instructions earlier in the pipeline than the faulting instruction will have to be reprocessed. Further, in some instances, there would be value in allowing the faulting instruction to execute before a partial or complete CPU freeze is implemented. It is to addressing these problems in a VLSI CPU that the present invention is directed.

### Objects of the Invention

It is therefore a broad object of this invention to provide improved error handling capability in a VLSI CPU.

It is a more specific object of this invention to provide such improved error handling capability which includes a central CPU error collection facility and means within an AX unit to delay reporting of an AX error under certain conditions.

It is a still more specific object of this invention to provide means within the AX unit to delay reporting of an error sensed in the processing of an instruction in a pipeline until all earlier instructions in the pipeline have completed execution.

In a variant, it is a still more specific object of this invention to provide means within the AX unit to delay reporting of an error sensed in the processing of an instruction in a pipeline until that instruction has completed execution.

### Summary of the Invention

These and other objects are solved in advantageous manner basically by applying the characteristic features laid down in claim 1. Further enhancements are provided by the subclaims.

The VLSI central processor unit (CPU), also designated as the basic processing unit (BPU), comprises three units, an error unit AX, a decimal numeric unit DN and a floating point unit FP. The BPU having a plurality of software visible registers issues an EX ERROR signal in response, among others, to sensed errors occurring within the AX unit during the processing and execution of instructions. An auxiliary (XRAM) memory receives and temporarily stores a record of the contents of the software visible registers concurrently with the availability of the result of each instruction executed by the AX unit, this operation preferably taking place via a cache memory unit. A clock unit is coupled to receive the AX ERROR signal and responds by suspending clock signals to the BPU as well as notifying a service processor (SP) of the error occurrence. The relevant contents of the XRAM are also forwarded to the SP for analysis, and the SP can order a restart by issuing a RESUME signal to the clock unit after the information obtained from the XRAM has been analyzed and the failing CPU reinitialized as necessary.

Preferably, assuming that the AX unit is pipelined and that the error has occurred during the preparation and execution activity associated with the pipeline, the issuance of an AX ERROR signal is delayed until all instructions in the pipe ahead of the faulting instruction have completed execution. Alternatively, the delay can be extended until all instructions in the pipe ahead of and including the faulting instruction have completed execution.

### Description of the Drawings

The invention may best be understood by reference to the following description taken in conjunction with the accompanying drawings of which:
FIG. 1 is a very high level block diagram of the central system structure of an information processing system in which the subject invention finds application;
FIG. 2 is a general block diagram of the central processing unit of the central system structure of FIG. 1, in which central processing unit the subject invention is employed;
FIG. 3 is a special purpose block diagram of the central processing unit revealing the error detection and handling aspects of the relationships among the several logic elements;
FIG. 4 is a data flow block diagram of the clock chip which is an important element in the detection and handling of errors within the central processing unit;
FIG. 5 is a high level block diagram illustrating the manner in which certain vital information is transferred during the error handling process to a service processor;
FIG. 6 is a representation of an exemplary pipeline;
FIG. 7 is a block diagram of logic within an AX unit for delaying the issuance of an AX ERROR signal under certain conditions; and
FIG. 8 is a block diagram of variant logic within an AX unit for obtaining a slightly different result than the logic of FIG. 7.

### Description of the Preferred Embodiment(s)

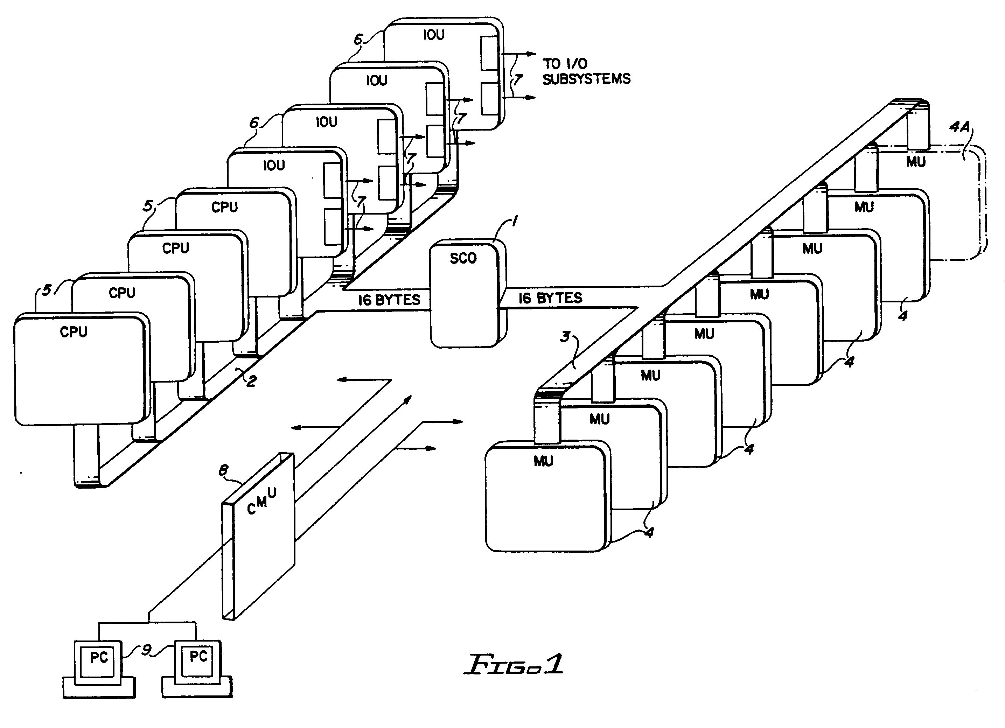

Attention is first directed to FIG. 1 which illustrates an exemplary Central Subsystem Structure (CSS) within which the subject invention may be incorporated. The System Control Unit (SCU) 1 centralizes and controls the system bus 2 and the memory bus 3 scheduling. More particularly, the SCU 1: A) performs memory control, single bit error correction and double bit error detection; B) controls the memory configuration of which there are one per Memory Unit (MU) 4; C) manages 64-byte block transfers between the Central Processing Units (CPUs) 5 and the MUs in conjunction with the store-into-cache feature of the CPUs; D) corrects single bit errors found in modified blocks of a CPU's cache or on a data transfer from a CPU, MU or Input/Output Unit (IOU) 6; and E) contains the system calender clock.

The system bus 2 interconnects 1 to 4 CPUs and 1 to 4 IOUs with each other and with the SCU. The system bus includes a 16-byte bidirectional data interface, a bidirectional address and command interface, an SCU status interface monitored by all CPUs and IOUs, and a small number of control lines between the SCU and each individual CPU and IOU. Data is exchanged on the system bus in 16, 32 or 64-byte groups, and data exchanges can be between a CPU and an MU, an IOU and an MU, two CPUs and a CPU and an IOU. The operations through the system bus 2 are:
- Read: 16, 32 or 64 bytes;
- Read with exclusivity: 64 bytes;
- Write from IOU: 16, 32 or 64 bytes;
- Write from CPU (swapping): 64 bytes;
- Interrupts and Connects;- Read/Write registers.

Every system bus operation consists of an address phase and a data phase, and an address phase can start every two machine cycles. Consecutive 16-byte data transfers within a group can occur on consecutive machine cycles. An IOU or CPU can wait for the data phase of up to two requests at the same time. The data blocks are transferred in the same order as the requests are received.

The memory bus 3 interconnects 1 to 8 MUs with the SCU. The memory bus includes a 16-byte bidirectional data interface, an address and command interface from the SCU to all MUs and a small number of control lines between the SCU and each individual MU. Data is exchanged on the memory bus in 16, 32 or 64-byte groups. The operations through the memory bus 3 are:
- Read: 16, 32 or 64 bytes;
- Write: 16, 32 or 64 bytes.

The main memory is composed of up to eight MUs. (A ninth unit, MU 4A, may be provided for ease of reconfiguration and repair in case of failure.) A single bit correction, double bit detection code is stored with every double word; i.e., 8 code bits for every 72 data bits. The code is arranged so that a 4-bit error within a single chip is corrected as four single bit errors in four different words. Data in an MU is addressed from the SCU in 16 byte (four word) increments. All bytes within any one MU are consecutively addressed; i.e., there is no interlace between MUs which operate in parallel. A memory cycle may start every machine cycle, and a memory cycle, as seen from a CPU, is ten machine cycles, assuming no conflicts with other units. An MU 4 contains 160 Dynamic Random Access Memory (DRAM) circuits, each of which has n by 4 bit storage elements where n = 256, 1024 or 4096.

The IOUs 6 each provide a connection between the system bus 2 and two Input/Output Buses (IOBs) 7 such that each IOB interfaces with a single IOU. Thus, an IOU manages data transfers between the CSS and the I/O subsystems, not shown in FIG. 1.

A Clock and Maintenance Unit (CMU) 8 generates, distributes and tunes the clock signals for all the units in the CSS, provides the interface between the service processor(s) (SP) 9 and the central processing, input/output and power subsystems, initializes the units of the CSS and processes errors detected within the CSS units. The CSS employs a two-phase clock system and latched register elements in which the trailing edge of clock 1 defines the end of phase 1, and the trailing edge of clock 2 defines the end of phase two, each phase thus being one-half of a machine cycle.

The SP(s) 9 may be a commodity personal computer with an integrated modem for facilitating remote maintenance and operations, and large systems may include two SPs through which the system can be dynamically reconfigured for high availability. The SP performs four major functions:
- monitors and controls the CSS during initialization, error logging or diagnostic operations;
- serves as the primary operating system console during system boot or on operator command;
- serves as console and data server for the input/output subsystems Maintenance Channel Adaptor (MCA);
- provides a remote maintenance interface.

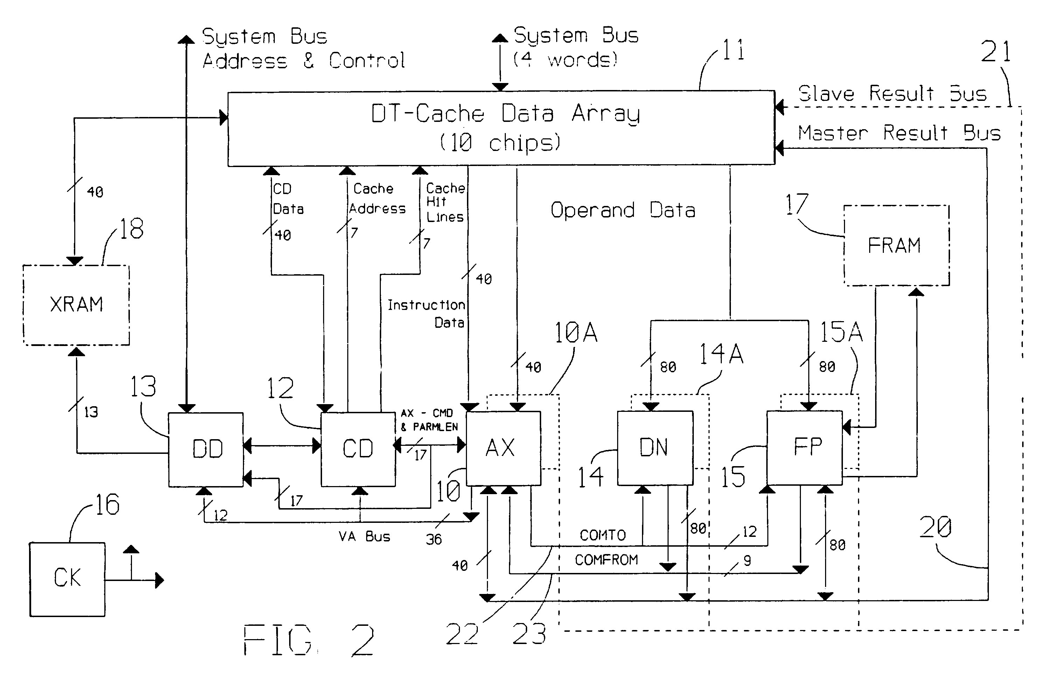

Attention is now directed to FIG. 2 which is a general block diagram of one of the CPUs 5 of FIG. 1. The Address and Execution Unit (AX unit) is a microprocessing engine which performs all address preparation and executes all instructions except decimal arithmetic, binary floating point and multiply/divide instructions. Two identical AX chips 10, 10A perform duplicate actions in parallel, and the resulting AX chip outputs are constantly compared to detect errors. The structure of the AX chip will be described in more detail below. The main functions performed by the AX unit include:
- effective and virtual address formation;
- memory access control;
- security checks;
- register change/use control;
- execution or basic instructions, shift instructions, security instructions, character manipulation and miscellaneous instructions.

The cache unit includes a data part of 64K bytes (16K words) and a set associative directory part which defines the main memory location of each 64-byte (16-word) block stored in the cache data part. Physically, the cache unit is implemented in an array of ten DT chips 11, a cache directory (CD) chip 12 and a duplicate directory (DD) chip 13. Each of the DT, CD and DD chips will be described in more detail below.

The specific functions performed by the DT chip array 11 include:
- combined instruction and operand data storage;
- instruction and operand buffering and alignment;
- data interface with the system bus 7 (FIG. 1);
- CLIMB safestore file.

The cache write strategy is "store into". If a longitudinal parity error is detected when reading a portion of a modified block from the cache, the block will be swapped out of the cache, corrected by the SCU and written into main memory. The corrected block will then be refetched from main memory.

Two copies of the cache directory information are respectively maintained in the CD and DD chips which perform different logic functions. The two directory copies allow interrogation of the cache contents from the system bus in parallel and without interference with instruction/operand access from the CPUs and also provide for error recovery.
Functions performed by the CD chip 12 include:
- cache directory for CPU accesses;
- instruction, operand and store buffer management;
- virtual-to-real address translation paging buffer.
Functions performed by the DD chip 13 include:
- cache directory for system accesses;
- system bus control;
- distributed connect/interrupt management;
- cache directory error recovery.

Efficient scientific calculation capability is implemented on the Floating Point (FP) chips 15, 15A. The identical FP chips execute all binary floating point arithmetic in duplicate. These chips, operating in concert with the duplicate AX chips 10, 10A, perform scalar or vector scientific processing.

The FP chip 15 (duplicated by the FP chip 15A):
- executes all binary and fixed and floating point multiply and divide operations;
- computes 12 by 72-bit partial products in one machine cycle;
- computes eight quotient bits per divide cycle;
- performs modulo 15 residue integrity checks.

Functions performed by the FP chips 15, 15A include:
- executes all floating point mantissa arithmetic except multiply and divide;
- executes all exponent operations in either binary or hexadecimal format;
- preprocesses operands and postprocesses results for multiply and divide instructions;
- provides indicator and status control.

Two special purpose random access memories (FRAM 17 and XRAM 18) are incorporated into the CPU. The FRAM chip 17 is an adjunct to the FP chips 15, 15A and functions as an FP control store and decimal integer table lookup. The XRAM chip 18 is an adjunct to the AX chips 10 10A and serves as a scratchpad as well as providing safestore and patch functions.

The CPU also employs a Clock Distribution (CK) chip 16 whose functions include:
- clock distribution to the several chips constituting the CPU;
- shift path control;
- maintenance;
- interface between CMU and CPU;
- provision of clock stop logic for error detection and recovery.

The DN chip 14 (in parallel with the DN chip 14A) performs the execution of the decimal numeric Extended Instruction Set (EIS) instructions. It also executes the Decimal-to-Binary (DTB), Binary-to-Decimal (BTD) conversion EIS instructions and Move-Numeric-Edit (MVNE) EIS instructions in conjunction with the AX chip 10. The DN chip both receives operands from memory and sends results to memory via the cache unit 11.

The AX, DN and FP chips, collectively, are sometimes referred to as the Basic Processing Unit (BPU). It was previously noted that the AX, DN and FP chips were duplicated with the duplicate units operating in parallel to obtain duplicate results which are available for integrity checking. (The unit pairs are respectively named the AX unit, the DN unit and the FP unit for convenience.) Thus, master and slave results are obtained in the normal operation of these chips. The master results are placed onto a Master Result Bus (MRB) 20 while the slave results are placed onto a Slave Result Bus (SRB) 21. Both the master and slave results are conveyed, on the MRB and SRB respectively, to the cache data array 11 of DT chips. The purposes of this arrangement will be described more fully below. In addition, a COMTO bus 22 and a COMFROM bus 23 couple together the AX unit, the DN unit and the FP unit for certain interrelated operations as will also be described more fully below.

Those skilled in the art will understand that a VLSI CPU is subject to the occurrence of numerous errors. While state of the art VLSI CPU's are very reliable and may run for long periods with no errors whatever occurring, there is little tolerance in many applications for accommodating even occasional errors. As a result, it is necessary to provide many error sensing and recovery circuits throughout the logic of a CPU to detect several types of errors such as parity errors (as a common example) which may occur when information is transferred between elements of the CPU. As previously noted, in the specific CPU chosen for illustration and in which the invention finds particular application, the outputs of duplicate master and slave AX, FP and DN chips are compared for identical results, and the content of the Master and Slave Result Busses are compared in the Cache Unit for similar identity. Various other errors are sensed throughout the CPU. According to the subject invention, the CK chip has a primary role in coordinating the error handling processes in the exemplary CPU.

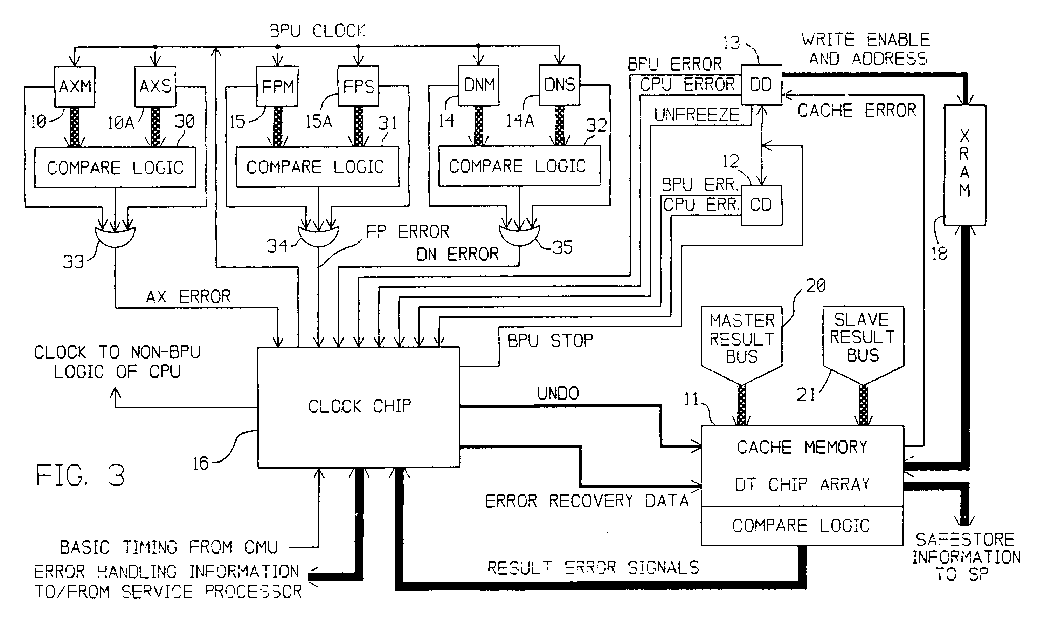

Attention is now directed to FIG. 3 in which the CPU is shown in a redrawn configuration more specifically oriented to disclose the present invention which is directed to certain aspects of the system facility for handling sensed CPU errors. It will be seen that numerous errors are reported to the CK chip 16. The CPU has a variety of sources of internally detected errors which are classified as hardware retryable, software retryable or non-retryable. Hardware retryable errors are those which are directly compensated by the hardware without involvement or intervention by the software operating system and with little or no involvement by the SP 9 (FIG. 1) to which all errors are reported. Certain paging and cache directory errors, for example, are deemed hardware retryable. For other error conditions, which may be software retryable or non-retryable, the CK chip 16 will either cause a freeze of BPU or CPU clocks as quickly as possible to minimize any loss of data relating to the failing condition or it will invoke a suspension of BPU and system bus operation. Two types of software retry are employed, one corresponding to a freeze and the other to a suspend. If a clock freeze occurs, the machine state is extracted by the SP and provided to the operating system for retry. If a BPU or CPU suspension occurs, the SP may direct a CPU RESUME signal, and the operating system will attempt a software retry.

All errors are reported to the SP which scans safestore information and other information to make a preliminary determination regarding the ability of the error-detecting CPU (or another CPU) to attempt a retry. Retry conditions are further evaluated by the operating system, and the actual software retry is done by execution on one of the CPUs.

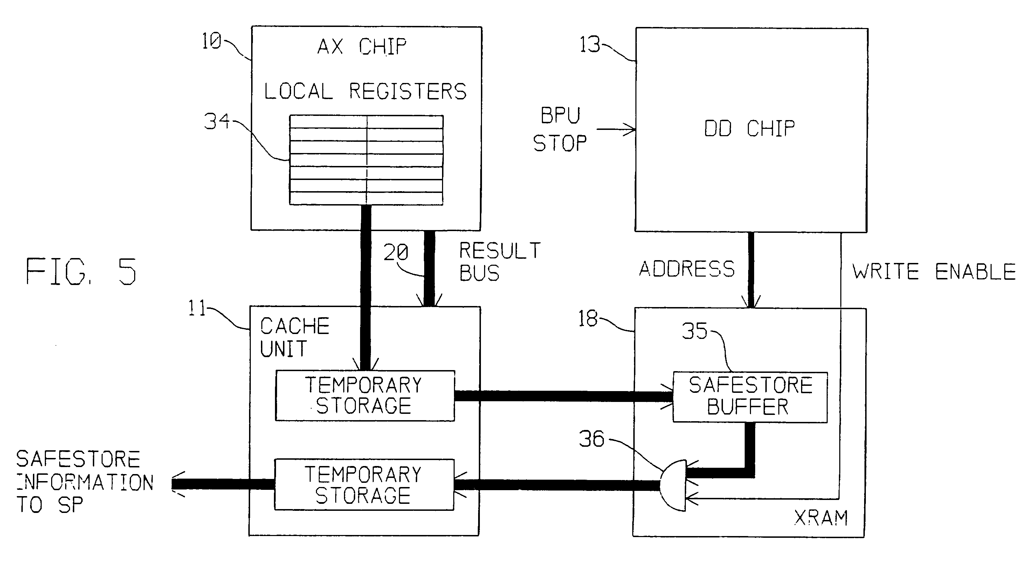

Referring briefly to FIG. 5, a simplified logic diagram is given illustrating the manner in which the safestore information may be communicated to the SP under error conditions. Whenever the AX chip 10 (10A) places a result on the result bus 20 (21), the contents of the software visible registers 34 are simultaneously transferred to a reserved safestore buffer 35 in the XRAM 18 via temporary storage in the cache unit 11. If an error signal is sent to the CK chip 16 by one of the several VLSI chips of the CPU, the DD chip 13 is notified (as will be discussed further below). The DD chip provides an address and a write enable to the XRAM to extract the then resident safestore frame for transfer (as represented by the AND-gate array 36) to the SP for analysis via the cache unit 11.

Referring again to FIG. 3, some of the major error types and sources will be briefly described. Each of the AX chips 10, 10A, FP chips 15, 15A and DN chips 14, 14A combine multiple error signal lines (as represented by OR-gates 33, 34, 35), including those from the individual unit compare logic blocks 30, 31, 32, to obtain AX, FP and DN ERROR signals which are applied to the CK chip 16. The majority of the checked logic areas sense parity errors during data transfers, but other error types, such as directory read mismatch, DIR Level In/Out miscompares, illegal command sequence, increment miscount, multiple directory hit, etc. as well as several types of compares are all monitored. The CD chip 12 and DD chip 13 each send separate BPU error and CPU error signals to the CK chip.

As has been mentioned briefly above, the master result bus 20 and the slave result bus 21 are checked for identity in the cache unit 11 by the compare logic in that logic block. The manner in which the result bus compare is performed is treated in detail in copending European patent application EP-(A)-0 463 573 which is assigned to the Assignee of the present invention. Briefly, corresponding bit positions on the result busses are applied to first and second inputs of one gate of an Exclusive OR-gate (or Exclusive NOR-gate) array in which the outputs are common such that any mismatch at any bit position is reflected as an error signal, appearing at the common output, which is coupled to the CK chip 16. Similar compare logic circuitry may be employed in the blocks 30, 31, 32 to detect, respectively, miscompares between the AX chips 10-10A, between the FP chips 15-15A and between the DN chips 14-14A.

AX errors, FP errors, DN errors and result bus errors are all deemed to be BPU errors. However, the CD chip 12 and the DD chip 13 can detect and advise the CK chip 16 of either BPU errors or CPU errors (for example, cache errors) which are treated differently. In addition, the CD and DD chips are notified of BPU errors originating elsewhere, and, under certain conditions (such as during a hardware/firmware troubleshooting process), the DD chip 13 may order a temporary "unfreeze" of the BPU clock. Certain cache errors are reported directly to the DD chip 13 which then determines if a BPU or CPU error signal is to be forwarded to the CK chip 16.

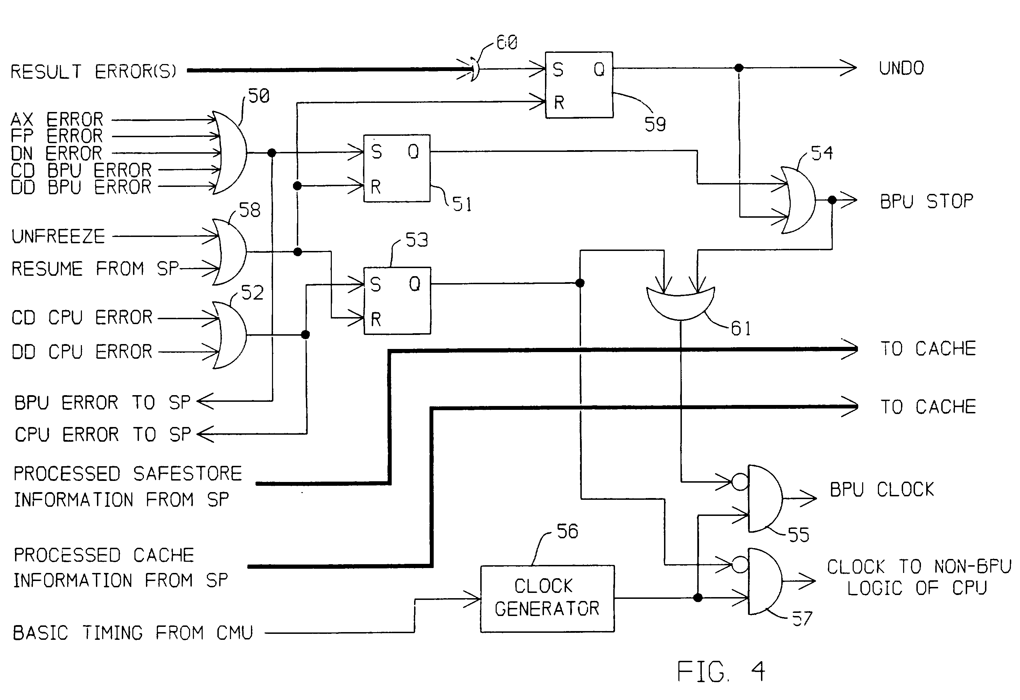

Attention is now directed to FIG. 4 which is a simplified functional block diagram of the CK chip 16. Signals representing AX ERRORs, FP ERRORs, DN ERRORs, CD BPU errors and DD BPU errors are ORed in an OR-gate 50. If one of these errors occurs, an indication of the presence of an error condition is latched by flipflop 51, and its Q output is applied as one input to an OR-gate 54 which therefore issues a BPU STOP signal In addition, the output of the OR-gate 50 is employed as a BPU ERROR signal to advise the SP. Similarly, CD chip detected CPU errors and DD chip detected CPU errors are ORed in an OR-gate 52, and the occurrence of one of these errors results in the output of the OR-gate 52 issuing a CPU ERROR signal to the SP and latching in the presence of an error condition into flipflop 53. Result compare errors, ORed by OR-gate 60, are used to set a flipflop 59 whose Q output is employed as the UNDO signal and also drives an input to OR-gate 54 such that the presence of a compare error also results in the issuance of a BPU STOP signal.

Thus, the OR-gate 54 issues the BPU STOP signal to the CK and DD chips (FIG. 3) if a BPU error occurs. The Q output from the flipflop 53 and the BPU STOP signal are ORed by OR-gate 61 whose output is applied to the inverting input of an AND-gate 55 which has its non-inverting input driven by the clock generator 56. The clock generator 56 issues a conventional stream of non-overlapping Φ1 and Φ2 clock pulses at a rate governed by the CMU as previously noted. Thus, if either a BPU error or a CPU error occurs, the AND-gate 55 is disabled, and the BPU CLOCK is interrupted instituting a BPU freeze. Similarly, if a CPU error occurs, the Q output from the flipflop 53, coupled to the inverting input of an AND-gate 57, interrupts the clock stream to the non-BPU logic of the CPU, such that, in concert with the AND-gate 55, the AND-gate 57 institutes a CPU freeze condition.

If a BPU STOP signal has issued and the DD chip determines that the BPU should be temporarily unfrozen, it issues the UNFREEZE signal (FIG. 3) which is ORed (58) with the RESUME signal from the SP. Thus, either signal will reset the flipflops 51, 53, 59 which may have been set by the various error signals to reenable the AND-gates 55 and (if disabled) 57 to restart operation. If appropriate, the DD chip can again invoke a BPU or CPU freeze after the conditions it seeks are established.

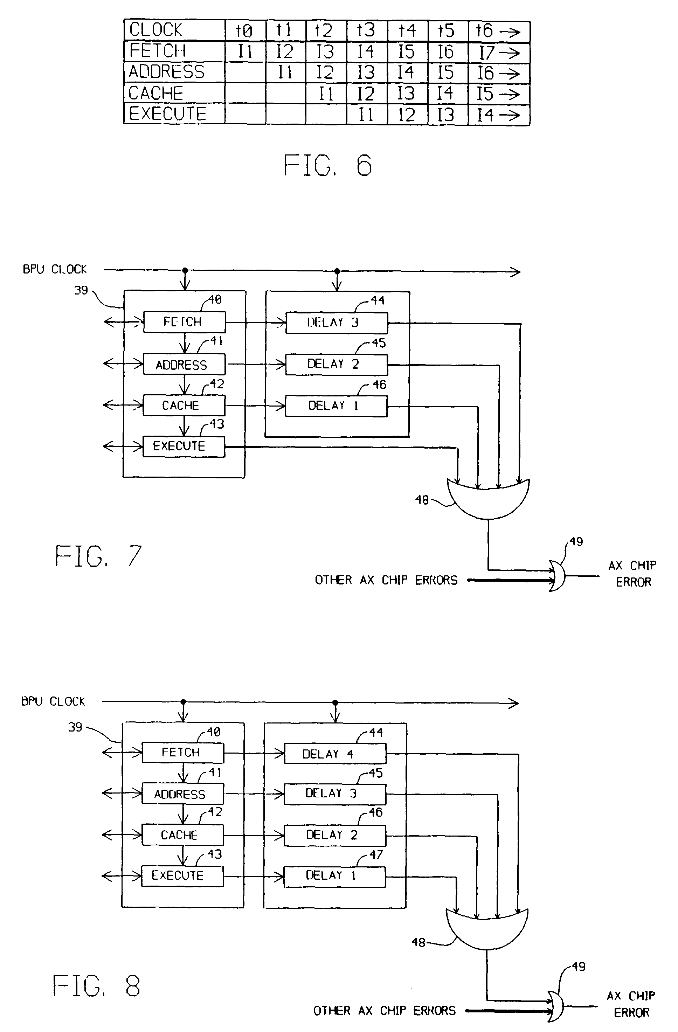

As previously discussed, it may not be desirable to immediately freeze the AX chip 10 (10A) if a fault arises in the development and execution of an instruction which is later in a pipeline than one or more non-faulting instructions. This concept may be more readily appreciated by reference to FIG. 6 which is a simplified representation of the timing between successive instructions executed in an exemplary four stage pipelined processor. Thus, if, for example, instruction I4 fails in its fetch phase (during clock cycle t3), it might be advantageous to go ahead and perform the operations normally occurring during t4 and t5 to permit instructions I2 and I3 to complete execution before the AX chip issues an error signal to the CK chip. In some CPUs and/or under some conditions, it may be advantageous to permit the faulting instruction to execute and the transfer of the contents of the software visible registers to be transferred to XRAM before freezing the BPU such that the safestore information may contain more information useful to the SP and/or operating system for diagnosing the source of the error and the remedial course to be attempted.

A process for obtaining the desired delay in forwarding errors observed in the AX chip 10 (10A) during instruction sequencing is shown in FIG. 7 which is a simplified representation of the relevant logic assuming an exemplary four stage pipeline requiring one clock cycle per stage. An error may occur at any stage of the operation stack 39 (containing stages 40, 41, 42, 43) to cause the issuance of a local error signal. If an error should occur during the execution stage, the error signal is applied directly to an OR-gate 48. However, if an error occurs at an earlier stage in the pipeline, the local error signal is applied to the input of one of three delay blocks 44, 45, 46 which delay the issuance of an error signal to the OR-gate 48 by three, two and one cycles, respectively. Thus, for example, if an error is sensed during the address phase of a given instruction, two additional cycles are permitted to allow the two preceding instructions to complete. The output of the OR-gate 48 is OR-ed with other AX chip errors by the OR-gate 49 whose output is coupled to one input of OR-gate 33 as shown in FIG. 3.

FIG. 8 shows a variant configuration in which a failing instruction is allowed to complete execution. Thus, delay block 47 is interposed intermediate the execute block and the OR-gate 48, and the respective cycle delays in the delay blocks 44, 45, 46, 47 are 4, 3, 2, and 1. In actual practice in which the AX unit is microprogrammed VLSI, either the FIG. 7 and FIG. 8 configuration can be realized dynamically under appropriate conditions.

While the representation of structure shown in the several figures may be used to construct actual circuitry, it will be understood that both the AX chip 10 and the CK chip 16 are, in the exemplary embodiment, actually implemented in microprogrammed and/or hardwired VLSI technology. Those skilled in the art will appreciate that pictorial and logical representations of VLSI circuitry are very difficult to comprehend unless the peruser is intimately familiar with the actual VLSI circuitry under study and, if used, its microprogramming; hence the necessity for the use of conceptual, functionally equivalent, logic diagrams to set forth the invention. Further, those skilled in the art will also appreciate that, as the limits of integration are pushed, an entire CPU employing the features of the present invention may be soon realized on a single chip, and the fact that the described embodiment is implemented among several VLSI chips is not intended to be a limitation on the invention.

## Claims

1. Apparatus for executing instructions in a data processing system (5) in a pipeline mode, having a plurality of series connected stages (AX, DN, FP), wherein the execution of each instruction is carried out during a plurality of successive time slots, wherein the initiation of execution of said instructions occurs in sequential order, and wherein the execution of a plurality of instructions occurs concurrently,
**characterized by:**
- an error signal generating circuit (30,33; 31,34; 32,35) for each data processing stage (AX, DN, FP; 10, 14, 15) for generating an error signal AX ERROR, DN ERROR, FP ERROR) denoting that an error has occurred during the execution of an instruction in that stage;
- a delay circuit (44, 45, 46, 47) for certain of said data processing stages for receiving the respective error signal generated by said stage and for providing a delayed output signal (AX CHIP ERROR) delayed by a predetermined time period with respect to the said received error signal; and
- a clock distribution circuit (16) for receiving all said delayed output signals and responsive to any one of said delayed output signals for generating a halt signal (BPU STOP) for causing at least a portion of said data processor to halt executing said instructions.

2. The apparatus of claim 1, further characterized by:
- said predetermined time period by which said delayed outout signal is delayed is at least equal to the time required for completion of execution of the instructions whose initiation of execution preceded the initiation of execution of the instruction which caused generation of said error signal.

3. The apparatus of claim 1, further characterized by:
- said predetermined time period by which said delayed output signal is delayed is at least equal to
(i) the time required for completion of execution of the instructions whose initiation of execution preceded the initiation of execution of the instruction which caused generation of said error signal, and
(ii) the time required for completion of execution of the instruction which caused generation of said error signal.

4. The apparatus of claim 1, wherein said data processing system (5) includes a service processor (9) for error analysi and a clock unit (8) to supply clock signals to said series connected stages (AX, DN, FP), characterized in that
- said clock unit (8) is coupled to receive said delayed output signal (AX CHIP ERROR) and suspends the supply of clock signals to said stages (AX, DN, FP) in response thereto; and
- switching means (58, 53, 61, 55) within said clock distribution circuit (16, Fig. 4) are provided to restart the supply of clock signals to said stages (AX, DN, FP) in response to the receipt of a resume signal (RESUME FROM SP) from said service processor (9).

5. The apparatus of claim 4, wherein said data processing system (5) comprises a plurality of software visible registers (11) and an auxiliary memory (18) adapted to receive and temporarily store a record of the contents of said software visible registers (11) concurrently with the availability of the result of each instruction executed by the address and execution stage (AX, 10), characterized in that, when the supply of clock signals to said stages (AX, ON, FP) is suspended, said record of the contents of said software visible registers is transferred from said auxiliary memory (18) to said service processor (9) for analysis.

6. The apparatus of claim 5, characterized in that said record of said software visible registers is transferred from said auxiliary memory (18) to said service processor (9) via a cache memory (11).

7. The apparatus of claim 1 or 2, wherein the issuance of said halt signal (BPU STOP) is delayed until all instructions in the pipe ahead of the faulting instruction have completed execution.

8. The apparatus of claim 1 or 3, wherein the issuance of said halt signal (BPU STOP) is delayed until all instructions in the pipe ahead of and including the faulting instruction have completed execution.

## Patentansprüche

1. Vorrichtung zum Ausführen von Befehlen in einem Datenverarbeitungssystem (5) in einem Pipeline-Modus mit einer Mehrzahl von seriell verbundenen Stufen (AX, DN, FP), wobei die Ausführung jedes Befehls während einer Mehrzahl von aufeinanderfolgenden Zeitschlitzen durchgeführt wird, wobei die Auslösung der Ausführung der Befehle in sequentieller Folge auftritt, und wobei die Ausführung einer Mehrzahl von Befehlen nebeneinander auftritt,
**gekennzeichnet durch** :
- eine Fehlersignal-Erzeugungsschaltung (30, 33; 31, 34; 32, 35) für jede Datenverarbeitungsstufe (AX, DN, FP; 10, 14, 15) zum Erzeugen eines Fehlersignals (AX ERROR, DN ERROR, FP ERROR), welches angibt, daß ein Fehler während der Ausführung eines Befehls in dieser Stufe aufgetreten ist;
- eine Verzögerungsschaltung (44, 45, 46, 47) für bestimmte der Datenverarbeitungsstufen zum Empfangen des jeweiligen durch die Stufe erzeugten Fehlersignals und zum Liefern eines verzögerten Ausgabesignals (AX CHIP ERROR), welches um eine vorbestimmte Zeitspanne bezüglich des empfangenen Fehlersignals verzögert ist; und
- eine Takt-Verteilungsschaltung (16) zum Empfangen aller verzögerten Ausgabesignale und ansprechend auf jedes der verzögerten Ausgabesignale zum Erzeugen eines Haltesignals (BPU STOP) zum Veranlassen mindestens eines Teils des Datenprozessors, die Ausführung der Befehle anzuhalten.

2. Vorrichtung nach Anspruch 1, weiter gekennzeichnet durch:
- Die vorbestimmte Zeitspanne, um welche das verzögerte Ausgabesignal verzögert ist, ist mindestens gleich der Zeit, welche für die Vollendung der Ausführung der Befehle benötigt wird, deren Ausführungsauslösung der Auslösung der Ausführung des Befehls, welcher die Erzeugung des Fehlersignals verursachte, voranging.

3. Vorrichtung nach Anspruch 1, weiter gekennzeichnet durch:
- Die vorbestimmte Zeitspanne, um welche das verzögerte Ausgabesignal verzögert ist, ist mindestens gleich
(i) der Zeit, die für die Vollendung der Ausführung der Befehle, deren Ausführungsauslösung der Auslösung der Ausführung des Befehls, der die Erzeugung des Fehlersignals verursachte, voranging, und
(ii) der Zeit, die gefordert wird zur Vollendung der Ausführung des Befehls, welcher die Erzeugung des Fehlersignals verursachte.

4. Vorrichtung nach Anspruch 1, wobei das Datenverarbeitungssystem (5) einen Dienstprozessor (9) zur Fehleranalyse und eine Takteinheit (8), um Taktsignale den seriell verbundenen Stufen (AX, DN, FP) zu liefern, aufweist, dadurch gekennzeichnet, daß
- die Takteinheit (8) verbunden ist, um das verzögerte Ausgabesignal (AX CHIP ERROR) zu empfangen, und die Lieferung von Taktsignalen an die Stufen (AX, DN, FP) in Antwort hierauf aussetzt; und
- Schaltmittel (58, 53, 61, 55) innerhalb der Takt-Verteilungsschaltung (16, Fig. 4) vorgesehen sind, um das Liefern von Taktsignalen an die Stufen (AX, DN, FP) wieder zu starten in Antwort auf den Empfang eines Wiederaufnahme-Signals (RESUME FROM SP) von dem Dienstprozessor (9).

5. Vorrichtung nach Anspruch 4, wobei das Datenverarbeitungssystem (5) eine Mehrzahl von Software-sichtbaren Registern (11) und einen Hilfsspeicher (18) aufweist, angepaßt, um einen Satz des Inhalts der Software-sichtbaren Register (11) zu empfangen und temporär zu speichern gleichzeitig mit der Verfügbarkeit des Ergebnisses jedes durch die Adress- und Ausführungs-Stufe (AX, 10) ausgeführten Befehls, dadurch gekennzeichnet, daß, wenn das Liefern von Taktsignalen an die Stufen (AX, DN, FP) ausgesetzt ist, der Satz des Inhalts der Software-sichtbaren Register von dem Hilfsspeicher (18) an den Dienstprozessor (9) zur Analyse transferiert wird.

6. Vorrichtung nach Anspruch 5, dadurch gekennzeichnet, daß der Satz der Software-sichtbaren Register von dem Hilfsspeicher (18) zu dem Dienstprozessor (9) über einen Cache-Speicher (11) transferiert wird.

7. Vorrichtung nach Anspruch 1 oder 2, wobei die Ausgabe des Haltesignals (BPU STOP) verzögert wird, bis alle Befehle in der Pipeline vor dem fehlerhaften Befehl die Ausführung vollendet haben.

8. Vorrichtung nach Anspruch 1 oder 3, wobei die Ausgabe des Haltesignals (BPU STOP) verzögert wird, bis alle Befehle in der Pipeline vor dem fehlerhaften Befehl inklusive dem fehlerhaften Befehl die Ausführung vollendet haben.

## Revendications

1. Dispositif pour exécuter des instructions dans un système (5) de traitement des données dans un mode pipeline, possédant une pluralité d'étages connectés en série (AX, DN, FP), dans lequel l'exécution de chaque instruction est effectuée pendant une pluralité de tranches de temps successives, dans lequel le lancement de l'exécution desdites instructions se fait en ordre séquentiel, et dans lequel l'exécution d'une pluralité d'instructions se fait en concurrence,
**caractérisé par** :
- un circuit (30,33; 31,34; 32,35) générateur de signal d'erreur pour chaque étage (AX, DN, FP; 10, 14, 15) de traitement de données pour produire un signal d'erreur (AX ERROR, DN ERROR, FP ERROR) indiquant qu'une erreur s'est produite pendant l'exécution d'une instruction dans cet étage;
- un circuit de retard (44, 45, 46, 47) pour certains desdits étages de traitement de données pour recevoir le signal d'erreur respectif produit par ledit étage et pour fournir un signal de sortie retardé (AX CHIP ERROR) retardé d'une durée prédéterminée par rapport audit signal d'erreur reçu; et
- un circuit (16) de distribution de signaux d'horloge pour recevoir tous lesdits signaux de sortie retardés et réagissant à l'un quelconque desdits signaux de sortie retardés pour produire un signal d'arrêt (BPU STOP) pour faire en sorte qu'au moins une partie dudit proceseur de données s'arrête d'exécuter lesdites instructions.

2. Dispositif selon la revendication 1, caractérisé en outre en ce que :
- ladite durée prédéterminée dont est retardé ledit signal de sortie retardé est au moins égale au temps nécessaire pour l'achèvement de l'exécution des instructions dont le lancement de l'exécution précédait le lancement de l'exécution de l'instruction qui a provoqué la production dudit signal d'erreur.

3. Dispositif selon la revendication 1, caractérisé en outre en ce que :
- ladite durée prédéterminée dont est retardé ledit signal de sortie retardé est au moins égale
(i) au temps nécessaire pour l'achèvement de l'exécution des instructions dont le lancement de l'exécution précédait le lancement de l'exécution de l'instruction qui a provoqué la production dudit signal d'erreur, et
(ii) au temps nécessaire pour l'achèvement de l'exécution de l'instruction qui a provoqué la production dudit signal d'erreur.

4. Dispositif selon la revendication 1, dans lequel ledit système (5) de traitement des données comporte un processeur de service (9) pour analyse d'erreur et une unité d'horloge (8) pour fournir des signaux d'horloge auxdits étages connectés en série (AX, DN, FP), caractérisé en ce que
- ladite unité d'horloge (8) est couplée pour recevoir ledit signal de sortie retardé (AX CHIP ERROR) et suspend la fourniture de signaux d'horloge auxdits étages connectés en série (AX, DN, FP) en réponse à celui-ci; et
- des moyens de commutation (58, 53, 61, 55) dans ledit circuit (16, figure 4) de distribution de signaux d'horloge sont prévus pour faire redémarrer la fourniture de signaux d'horloge auxdits étages (AX, DN, FP) en réponse à la réception d'un signal de reprise (RESUME FROM SP) venant dudit processeur de service (9).

5. Dispositif selon la revendication 4, dans lequel ledit système (5) de traitement des données comporte une pluralité de registres (11) visibles de logiciel et une mémoire auxiliaire (18) adaptée pour recevoir et stocker temporairement un enregistrement des contenus desdits registres (11) visibles de logiciel en concurrence avec la disponibilité du résultat de chaque instruction exécutée par l'étage d'adresse et d'exécution (AX, 10), caractérisé en ce que, lorsque la fourniture de signaux d'horloge auxdits étages (AX, DN, FP) est suspendue, ledit enregistrement des contenus desdits registres visibles de logiciel est transféré de ladite mémoire auxiliaire (18) audit processeur de service (9) pour analyse.

6. Dispositif selon la revendication 5, caractérisé en ce que ledit enregistrement desdits registres visibles de logiciel est transféré de ladite mémoire auxiliaire (18) audit processeur de service (9) par une antémémoire (11).

7. Dispositif selon la revendication 1 ou 2, dans lequel l'émission dudit signal d'arrêt (BPU STOP) est retardée jusqu'à l'achèvement de l'exécution de toutes les instructions situées dans le canal de communication en amont de l'instruction défaillante.

8. Dispositif selon la revendication 1 ou 3, dans lequel l'émission dudit signal d'arrêt (BPU STOP) est retardée jusqu'à l'achèvement de l'exécution de toutes les instructions situées dans le canal de communication en amont de et y compris l'instruction défaillante.
